# EUROPÄISCHE PATENTSCHRIFT

(11) **EP 1 472 963 B1**
(45) Veröffentlichungstag und Bekanntmachung des Hinweises auf die Patenterteilung: **10.12.2008**
(21) Anmeldenummer: 03405312.4
(22) Anmeldetag: 02.05.2003
(51) Int. Cl.: A47J 31/44, A47J 31/40, F04B 43/12

(54) **Einrichtung zur Ausgabe von Milch und/oder Milchschaum**
Device for dispensing milk and/or milk-foam
Dispositif pour distribuer du lait et/ou de la mousse de lait

(43) Veröffentlichungstag der Anmeldung: 03.11.2004
(73) Patentinhaber: M. Schaerer AG, 3302 Moosseedorf (CH)
(72) Erfinder: Lüssi, André, 3303 Jegenstorf (CH)
(74) Vertreter: BOVARD AG

(56) Entgegenhaltungen:
- WO-A-96/27317
- DE-A- 2 525 385
- GB-A- 1 344 825
- US-A- 5 498 757

## Beschreibung

Die vorliegende Erfindung bezieht sich auf eine Einrichtung zur Ausgabe von Milch und/oder Milchschaum, umfassend einen Rahmen, einen im Rahmen angeordneten kühlbaren Schrank für die Aufnahme eines Milch enthaltenden Behälters, eine Entnahmeleitung, die in den Behälter einsetzbar ist, und eine ausserhalb des kühlbaren Schrankes angeordneten Emulgiervorrichtung, die über eine weitere Leitung zur Zuführung der Milch mit der Entnahmeleitung verbunden ist, welche weitere Leitung aus einem flexiblen Schlauch besteht, der in eine Schlauchquetschpumpe eingelegt ist, und welche Emulgiervorrichtung zur Erwärmung oder Aufschäumung der durchgeleiteten Milch, die dann zur Ausgabedüse gelangt, mit einer Wasserdampfzuführung versehen ist.

Derartige Einrichtungen sind bekannt. Sie werden vielfach in Verbindung mit Kaffeemaschinen eingesetzt, sei dies als von der Kaffeemaschine unabhängig funktionierende Einrichtung, sei dies als in die Kaffeemaschine integriertes Modul, wodurch die Kaffeemaschine automatisch unterschiedliche Kaffees liefern kann, neben schwarzem Kaffee und Espresso auch Milchkaffee, Cappuccino und Macchiato. Mit diesen Einrichtungen kann aber auch warme Milch ausgegeben werden.

Bekanntlich wird bei derartigen Einrichtungen durch die Emulgiervorrichtung ein Wasserdampfstrom geleitet, durch welchen gemäss dem Venturiprinzip die Milch aus dem Behälter angesaugt und mit dem Wasserdampf vermischt wird. Durch den Wasserdampf wird die Milch erwärmt, und je nachdem, wie viel Luft in der Emulgiervorrichtung noch beigefügt wird, wird die Milch aufgeschäumt. Um hierbei einen optimalen Milchschaum beispielsweise für einen Cappuccino zu erhalten, ist es erforderlich, ein optimales Verhältnis zwischen Wasserdampf, Luft und Milch einhalten zu können.

Diese Einrichtungen und insbesondere das Leitungssystem für die Milch und die Emulgiervorrichtung müssen von Zeit zu Zeit gereinigt werden. Hierzu wird beispielsweise ein Behälter mit einer Reinigungsmittellösung in die Einrichtung eingesetzt, danach wird Wasserdampf durch die Emulgiervorrichtung geführt, wodurch das Reinigungsmittel angesaugt wird und insbesondere die Leitungen für die Milch reinigen. Nach dem Reinigungsvorgang wird die Einrichtung mit Wasser gespült, wobei wiederum der Wasserdampf zur Ansaugung des Wassers dient.

Mit diesem Reinigungsvorgang wird das gesamte System, das von Milch durchflossen wird, gereinigt. Das Reinigungsmittel muss hierzu eine kalte Temperatur aufweisen, da dieses durch die Emulgiervorrichtung angesaugt werden muss, was bei Reinigungsmitteln mit erhöhter Temperatur nicht gewährleistet wäre, da der Ansaugvorgang für kalte Medien optimal ausgelegt ist. Somit ist es erforderlich, kalte Reinigungslösungen zu verwenden, die zum Erreichen der erforderlichen Hygiene relativ aggressiv sind. Derartige aggressive Reinigungsmittel müssen als Gefahrengut klassiert sein und verlangen somit die erforderlichen entsprechenden Vorkehrungen, was aufwendig ist hinsichtlich der Anwendung aber auch hinsichtlich der logistischen, lager-transporttechnischen Behandlung.

Aus der WO-A-9627317 ist eine Einrichtung zum Zubereiten von warmen Getränken dargestellt, bei welcher über eine Pumpe das aufzuheizende Getränk in eine Mischkammer geführt wird. Hierbei ist die Pumpe dauernd zugeschaltet.

Aus der GB-A-1344825 ist der Einsatz einer Schlauchquetschpumpe zur Förderung von Flüssigkeiten bekannt.

Die Aufgabe der vorliegenden Erfindung besteht nun darin, eine Einrichtung zur Ausgabe von warmer und kalter Milch und/oder Milchschaum zu schaffen, welche die zu beziehenden Produkte in optimaler Qualität liefert, und welche eine einfache und optimale Reinigung des Systems ermöglicht.

Erfindungsgemäss erfolgt die Lösung dieser Aufgabe dadurch, dass die Schlauchquetschpumpe innerhalb des kühlbaren Schrankes angeordnet ist und über einen ausserhalb des kühlbaren Schrankes angeordneten Antriebsmotor, insbesondere Elektromotor antreibbar ist und dass die Schlauchquetschpumpe mit Umstellmitteln ausgestattet ist, mit welchen die Schlauchquetschpumpe von einem geschlossenen Pumpzustand in einen offenen, den Durchgang des flexiblen Schlauches freigebenden Zustand umstellbar ist.

Mit dieser erfindungsgemässen Lösung wird ermöglicht, dass die Milch durch die Emulgiervorrichtung angesaugt werden kann und in optimaler Weise als Milchschaum oder heisse Milch portionenweise erzeugt werden kann, es ist auch möglich, kalte Milch (durch den Einsatz der Schlauchquetschpumpe) und anschliessend Milchschaum (durch Verwendung der Emulgiervorrichtung) portionenweise auszugeben, wodurch beispielsweise ein Kaffee mit der Bezeichnung "Macchiato" hergestellt werden kann, ebenso ist es möglich, durch den Einsatz der Schlauchquetschpumpe kalte Milch zu fördern.

Mit dieser erfindungsgemässen Lösung ist es auch in optimaler Weise möglich, die Einrichtung zu reinigen. Durch den Einsatz der Schlauchquetschpumpe kann eine heisse Lösung mit Reinigungsmittel durch die Einrichtung gepumpt werden, welche eine basische Lösung ist, die Fette wesentlich effizienter lösen kann, als vergleichsweise kalte Lösungen.

Indem die Schlauchquetschpumpe innerhalb des kühlbaren Schrankes angeordnet ist und über einen ausserhalb des kühlbaren Schrankes angeordneten Antriebsmotor antreibbar ist, wird erreicht, dass auch im Leitungssystem sich befindende Milch gekühlt ist, die Qualität der Milch ist gewährleistet.

Eine vorteilhafte Ausgestaltung der Erfindung besteht darin, dass die Umstellmittel für die Schlauchquetschpumpe aus einer Kolbenzylindereinheit gebildet sind, deren Kolbenstange mit dem den Quetschraum begrenzenden Bogenteil verbunden ist. Insbesondere wenn diese Kolbenzylindereinheit mit unter Druck stehendem Wasser betätigt wird, wobei die Beaufschlagung Ober ein Ventil steuerbar ist und das Rücklaufwasser als Abwasser abführbar ist, wird eine einfache Handhabung und ein einfacher Aufbau erreicht. Das unter Druck stehende Wasser kann beispielsweise direkt aus dem Leitungsnetz bezogen werden. Wenn die Einrichtung in eine Kaffeemaschine integriert ist, kann dieses unter Druck stehende Wasser auch von der Kaffeemaschine bezogen werden.

In vorteilhafter Weise lässt sich die Drehrichtung der Schlauchquetschpumpe nach dem Milchbezugsprozess umkehren, wodurch sich die in der weiteren Leitung befindende Milch in den Behälter zurückpumpen lässt.

Eine weitere vorteilhafte Ausgestaltung der Erfindung besteht darin, dass im Bereich des Bodens des Schrankes, auf welchem der Behälter aufsetzbar ist, Mittel zum Feststellen des Gewichts des Behälters angeordnet sind. Dadurch lässt sich der Füllstand des Behälters messen und in geeigneter Weise an die Steuerung der Einrichtung weitergeben, der Füllstand kann dann in bekannter Weise beispielsweise angezeigt werden.

In vorteilhafter Weise kann zur Reinigung der Einrichtung der Behälter für die Milch aus dem Schrank herausgenommen werden, an dessen Stelle wird ein anderer Behälter mit einer Reinigungslösung eingesetzt, welches durch die Schlauchquetschpumpe durch die Entnahmeleitung, die weitere Leitung und die Emulgiervorrichtung gefördert werden kann. Danach kann der Behälter mit Spülwasser gefüllt werden, welches durch die Schlauchquetschpumpe ebenfalls durch das Leitungssystem der Einrichtung gefördert werden kann. Dieser Reinigungsvorgang ist effizient und einfach in der Durchführung.

In vorteilhafter Weise besteht der flexible Schlauch aus Silikon oder einem ähnlichen Material, wodurch dieser die Anforderungen der Elastizität und der Verformbarkeit im Bereich der Quetschpumpe gewährleistet und die hygienischen Anforderungen im Zusammenhang mit Lebensmitteln erfüllt.

Eine weitere vorteilhafte Ausgestaltung der Erfindung besteht darin, dass diese Einrichtung zur Ausgabe von Milch und/oder Milchschaum als Modul an eine automatische Kaffeemaschine angebaut ist, wobei diese Kaffeemaschine durch weitere Module ausgebaut werden kann. Dadurch wird eine Kaffeemaschine geschaffen, welche automatisch die unterschiedlichsten Kaffees ausgeben kann. Eine einfache Handhabung beim Bezug von Kaffee wird dann erreicht, wenn zwischen Brüheinrichtung und Kaffeeausgabedüse ein Ausgabebecher eingesetzt ist, in welchem auch die Ausgabedüse der Emulgiervorrichtung mündet und somit die Ausgabe von Kaffee, Milch und/oder Milchschaum durch die Kaffeeausgabedüse erfolgt.

Eine Ausführungsform der vorliegenden Erfindung wird nachfolgend anhand der beiliegenden Zeichnung beispielhaft näher erläutert.

Es zeigt
Fig. 1 in schematischer Darstellung die erfindungsgemässe Einrichtung zur Ausgabe von Milch und/oder Milchschaum, bei welcher sich die Schlauchquetschpumpe im geöffneten Zustand befindet;
Fig. 2 eine schematische Darstellung der Einrichtung gemäss Fig. 1, wobei sich die Schlauchquetschpumpe im geschlossenen Pumpzustand befindet;
Fig. 3 eine Ansicht der erfindungsgemässen Einrichtung mit offenen Abdeckungen;
Fig. 4 eine Ansicht auf die Schlauchquetschpumpe im geöffneten Zustand;
Fig. 5 eine Schnittdarstellung der Schlauchquetschpumpe entlang Linie V-V gemäss Fig. 4;
Fig. 6 eine Ansicht auf die Schlauchquetschpumpe im geschlossenen Pumpzustand;
Fig. 7 eine Schnittdarstellung der Schlauchquetschpumpe entlang Linie VII-VII gemäss Fig. 6;
Fig. 8 eine Ansicht einer modulmässig zusammengestellten Kaffeemaschine mit der erfindungsgemässen Einrichtung; und
Fig. 9 eine Ansicht der Kaffeemaschine gemäss Fig. 8 mit geöffneten Frontabdeckungen.

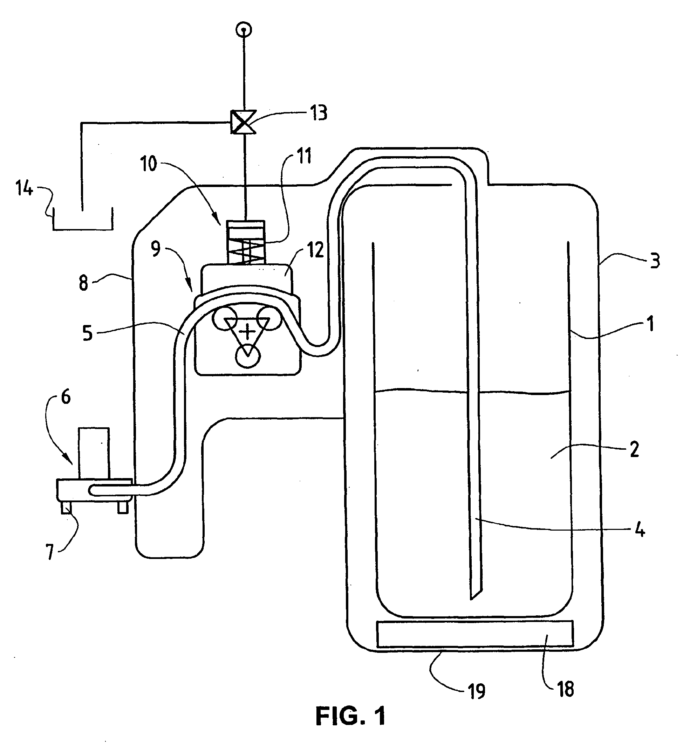

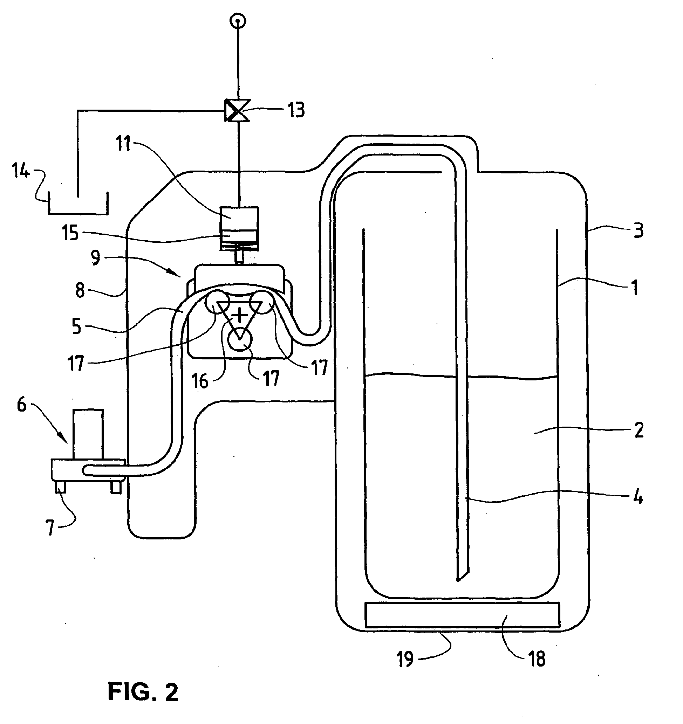

Wie aus den schematischen Darstellungen der erfindungsgemässen Einrichtung gemäss den Fig. 1 und 2 ersichtlich ist, ist ein Behälter 1, in dem Milch 2 enthalten ist, in einem kühlbaren Schrank 3 eingesetzt. In dem Behälter 1 und demzufolge in die Milch 2 hinein ragt eine Entnahmeleitung 4. Diese Entnahmeleitung 4 ist mit einer weiteren Leitung 5 verbunden, die als Verbindung dient zu einer Emulgiervorrichtung 6, die ausserhalb des kühlbaren Schrankes 3 angeordnet ist.

In bekannter, nicht dargestellter Weise kann durch die Emulgiervorrichtung 6 Wasserdampf durchgeleitet werden, mit welchem die Milch 2 aus dem Behälter 1 über die Entnahmeleitung 4 und die weitere Leitung 5 angesaugt werden kann. Neben der Durchleitung von Wasserdampf durch die Emulgiervorrichtung 6 kann dieser auch über ein Ventil gesteuert Luft zugeführt werden, bei dessen Zuführung die Milch in der Emulgiervorrichtung aufgeschäumt wird, während bei geschlossenem Luftzuführventil die Milch durch den Wasserdampf lediglich aufgewärmt wird. Das entsprechende Produkt tritt durch die Ausgabedüsen 7 aus, unter welche beispielsweise eine Tasse gestellt werden kann.

In einem ebenfalls gekühlten Anbauteil 8 des füllbaren Schrankes 3 ist eine Schlauchquetschpumpe 9 angeordnet. Durch diese Schlauchquetschpumpe 9 wird die weitere Leitung 5 geführt, die aus einem flexiblen Schlauch besteht, vorzugsweise aus Silikon. Die Schlauchquetschpumpe 9 ist in Fig. 1 in geöffnetem Zustand dargestellt, dies heisst, dass der Durchgang des flexiblen Schlauches 5, der die weitere Leitung bildet, frei ist. Die Schlauchquetschpumpe 9 kann auch geschlossen werden, wie dies dann im Zusammenhang mit Fig. 2 beschrieben wird, zum Verstellen dieser Schlauchquetschpumpe 9 sind Umstellmittel 10 vorgesehen, die aus einer Kolbenzylindereinheit 11 gebildet sind, mit welcher der den Quetschbereich begrenzende Bogenteil 12 verschiebbar ist. Zum Betätigen der Kolbenzylindereinheit 11 wird unter Druck stehendes Wasser verwendet, mit welchem der Kolben beaufschlagbar ist, wobei dies über ein Ventil 13 steuerbar ist, während das Rücklaufwasser in einem Sammelbecken 14 gesammelt wird.

Selbstverständlich könnten die Umstellmittel auch anders ausgebildet sein, beispielsweise als Motor oder als Elektromagnet.

Wie aus Fig. 2 ersichtlich ist, kann die Schlauchquetschpumpe 9 geschlossen werden, indem der Bogenteil 12 durch den beaufschlagten Kolben 15 der Kolbenzylindereinheit 11 abgesenkt wird. Der flexible Schlauch 5 wird zwischen diesem Bogenteil 12 und dem darunter auf einem Drehkreuz 16 angeordneten Rollen 17 gequetscht. Zum Pumpvorgang wird das Drehkreuz 16 in Rotation versetzt, die Rollen 17 rollen auf dem Bogenteil 12 ab, durch die fortlaufende Bewegung der Quetschung des flexiblen Schlauches 5 entsteht eine Pumpwirkung.

Wie aus den Fig. 1 und 2 ersichtlich ist, steht der Behälter 1 mit der darin enthaltenen Milch 2 im kühlbaren Schrank 3 auf einer Waage 18, die im Bereich des Bodens 19 des kühlbaren Schrankes 3 angeordnet ist. Mit dieser Waage 18 ist das Gewicht des Behälters 1 feststellbar und daraus lässt sich der Füllstand des Behälters ermitteln. In bekannter Weise wird ein entsprechendes Signal an die nicht dargestellte zentrale Steuereinheit der Einrichtung geliefert, in welcher bewirkt wird, dass der Füllstand in geeigneter Form angezeigt wird.

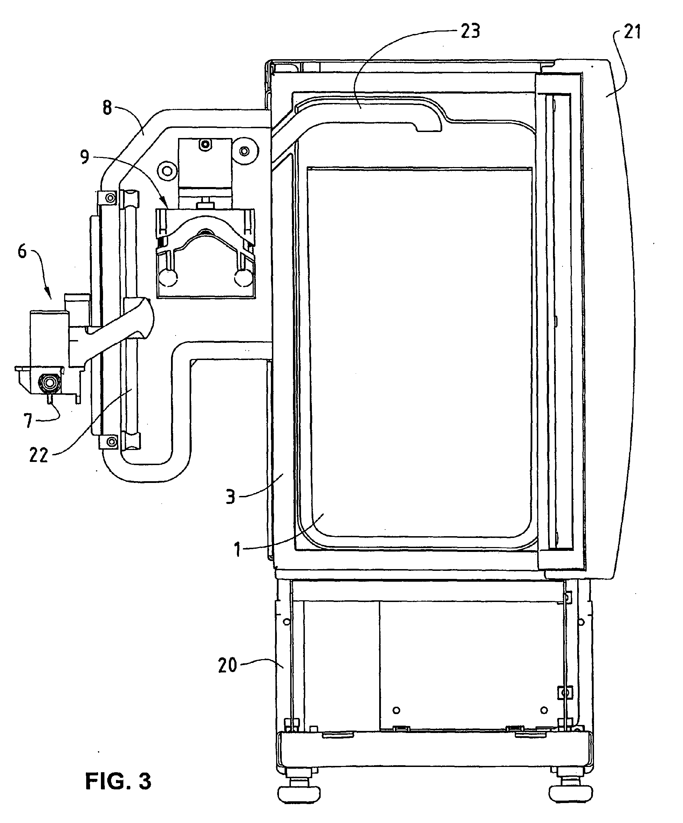

In Fig. 3 ist eine Ausführungsform einer erfindungsgemässen Einrichtung dargestellt. Der kühlbare Schrank 3 ist in einem Rahmen 20 gehalten, der Raum, in welchem der Behälter 1 untergebracht wird, ist mit einer verschliessbaren Türe 21 versehen. Der hier dargestellte kühlbare Schrank 3 arbeitet gemäss dem allgemein bekannten Peltier-Prinzip. Die Schlauchquetschpumpe 9 ist im zum kühlbaren Schrank 3 gehörenden Anbauteil 8 untergebracht, die Emulgiervorrichtung 6 mit der Ausgabedüse 7 ist höhenverstellbar entlang der an diesem Anbauteil 8 angebrachten Stange 22.

Die weitere Leitung bzw. der flexible Schlauch 5 ist in dieser Fig. 3 nicht dargestellt, er würde aber von einer Anschlussstelle an der Emulgiervorrichtung 6 durch die Schlauchquetschpumpe 9 geführt und von hier über den Kanal 23 in den Bereich des Behälters 1.

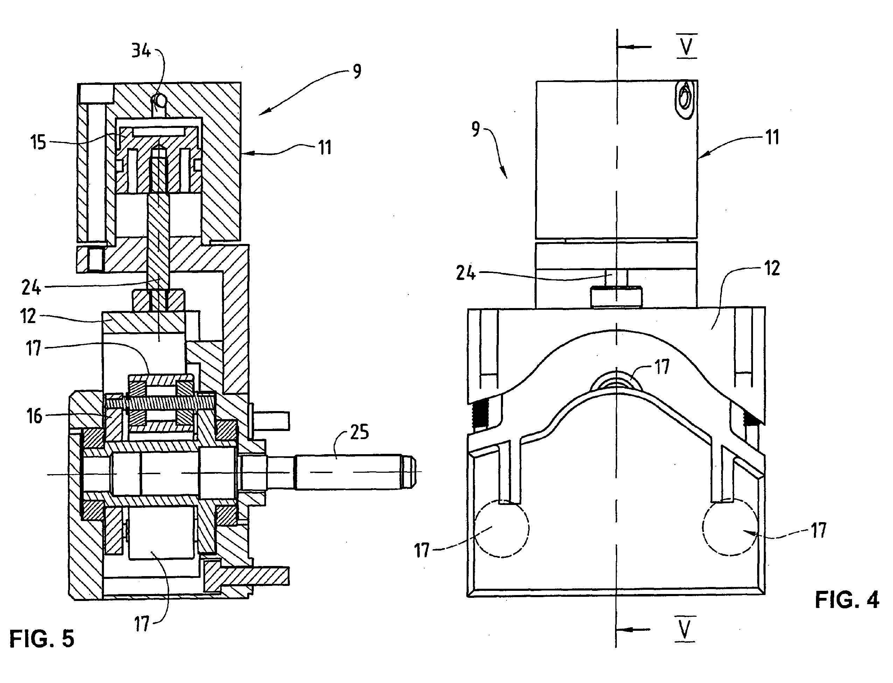

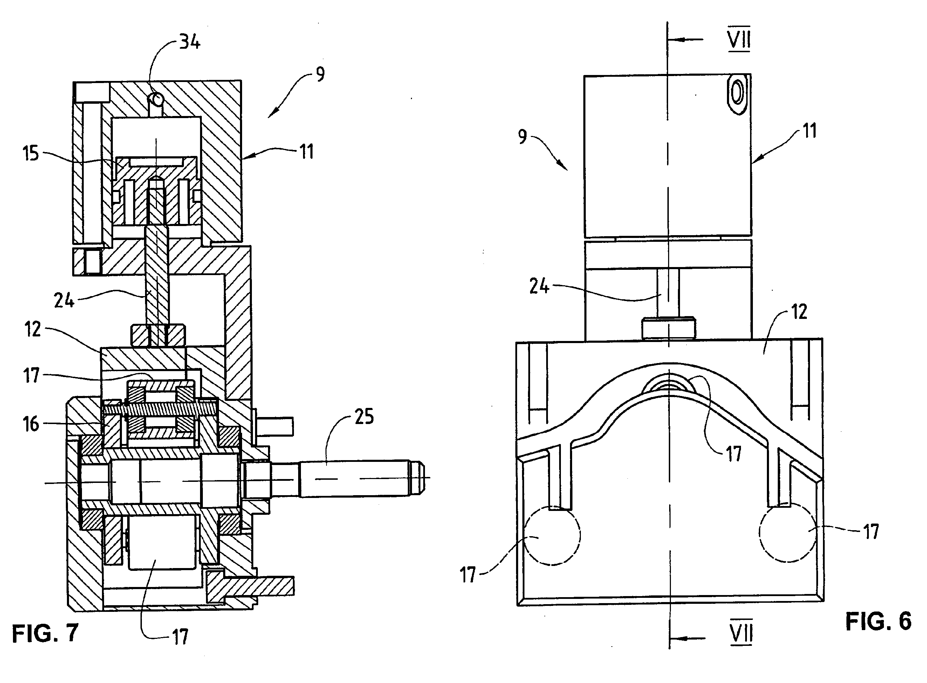

Die Fig. 4 bis 7 zeigen die Schlauchquetschpumpe 9. In den Fig. 4 und 5 ist die Schlauchquetschpumpe 9 in geöffnetem Zustand dargestellt, während die Fig. 6 und 7 die Schlauchquetschpumpe 9 im geschlossenen Zustand zeigen, bei welchem das Pumpen möglich ist. An der Kolbenstange 24, die mit dem Kolben 15 der Kolbenzylindereinheit 11 verbunden ist, ist der Bogenteil 12 befestigt. Durch Beaufschlagung des Kolbens 15 durch die Zuführöffnung 34 lässt sich der Kolben 15 mit der Kolbenstange 24 und demzufolge mit dem Bogenteil 12 absenken, der Schlauch wird zwischen dem Bogenteil 12 und den benachbarten Rollen 17 gequetscht, wie dies insbesondere in Fig. 2 dargestellt ist.

Das Drehkreuz 16, auf welchem die Rollen 17 drehbar gelagert sind, lässt sich über die Antriebswelle 25 über einen nicht dargestellten Elektromotor in Drehung versetzen. Hierbei ist der Elektromotor ausserhalb des kühlbaren Schrankes 3 untergebracht, das heisst, dass die Antriebswelle 25 durch die Wandung des kühlbaren Schrankes 3 hindurchgeführt ist. Während des Verdrehens des Drehkreuzes 16 quetschen die Rollen 17 den in die Schlauchquetschpumpe 9 eingelegten Schlauch in Zusammenwirkung mit dem Bogenteil fortlaufend, wodurch die Pumpwirkung entsteht. Durch Änderung der Drehzahl des Elektromotors lässt sich die durch die Schlauchquetschpumpe 9 geförderte Menge pro Zeit variieren.

Nachfolgend wird die Funktion der Einrichtung bei den verschiedenen Bezugsmöglichkeiten und Arbeitseinsätzen beschrieben.

Beim Bezug von heisser Milch wird die Schlauchquetschpumpe 9 im geöffneten Zustand gehalten, wie dies in den Fig. 1, 4 und 5 dargestellt ist. Der Durchgang des flexiblen Schlauchs 5 ist freigegeben. In die Emulgiervorrichtung 6 wird Wasserdampf eingelassen, die Milch wird aus dem Behälter 1 angesaugt und durch den Wasserdampf aufgeheizt, und wird durch die Ausgabedüsen 7 als heisse Milch abgegeben. Die Luftzuführeinrichtung in der Emulgiervorrichtung 6 ist hierzu geschlossen.

Zum Bezug von Milchschaum befindet sich die Schlauchquetschpumpe 9 ebenfalls in geöffnetem Zustand, durch die Emulgiervorrichtung 6 wird wiederum Wasserdampf geführt, die Milch wird aus dem Behälter 1 angesaugt. Zusätzlich wird in die Emulgiervorrichtung 6 Luft eingeführt, in der Emulgiervorrichtung wird die Milch aufgeschäumt und aufgewärmt, der Milchschaum wird dann durch die Ausgabedüse 7 abgegeben.

Zur Ausgabe von kalter Milch wird die Schlauchquetschpumpe 9 in den geschlossenen Zustand gebracht, wie dies in den Fig. 2, 6 und 7 dargestellt ist, das Drehkreuz 16 mit den Rollen 17 wird in Rotation versetzt, die kühle Milch wird aus dem Behälter 1 in die Emulgiervorrichtung 6 gepumpt und wird über die Ausgabedüse 7 ausgegeben. Die Wasserdampfzuführung und die Luftzuführung in die Emulgiervorrichtung 6 sind geschlossen.

Nach dem Bezug von Milch in irgend einer Form kann die weitere Leitung 5 entleert werden, indem die Schlauchquetschpumpe 9 in den geschlossenen Zustand gebracht wird und indem das Drehkreuz 16 in entgegengesetzter Richtung verdreht wird. Die in der weiteren Leitung 5 sich noch befindende Milch wird somit in den Behälter 1 zurückgepumpt.

Vor der Ausgabe von Milchschaum oder heisser Milch kann die Schlauchquetschpumpe 9 kurzzeitig in den geschlossenen Zustand gebracht werden und kurzzeitig die Pumpfunktion ausüben, womit die weitere Leitung 5 bis zur Emulgiervorrichtung 6 mit Milch gefüllt werden kann, wonach der Bezug von heisser Milch oder Milchschaum bei geöffneter Schlauchquetschpumpe durch die Emulgiervorrichtung 6 und die Ausgabedüse 7 vorgenommen werden kann. Damit wird vermieden, dass während des Ansaugvorganges durch die Emulgiervorrichtung, wenn die weitere Leitung 5 teilweise noch leer oder mit Luftblasen versehen ist, aus der Ausgabedüse Milchspritzer ausgeschleudert werden.

Zum Reinigen der Einrichtung zur Ausgabe von Milch und/oder Milchschaum kann beispielsweise der Behälter 1 aus dem kühlbaren Schrank 3 herausgenommen werden und durch einen anderen Behälter ersetzt werden, welcher mit einer Reinigungslösung gefüllt ist. Diese Reinigungslösung weist idealerweise eine Temperatur von etwa 60° C auf und kann eine basische Lösung sein, mit welcher die Fette effizient gelöst werden können. Zum Reinigen der Einrichtung wird die Schlauchquetschpumpe 9 in den geschlossenen Zustand gebracht und in Betrieb genommen, das Reinigungsmittel wird durch die Entnahmeleitung 4, die weitere Leitung 5 und die Emulgiervorrichtung 6 gefördert und über die Ausgabedüse 7 kann diese in ein Auffanggefäss austreten. Nach der Beendigung des Reinigungsvorgangs kann in den Behälter Wasser eingefüllt werden, wonach die Einrichtung durch Betätigung der Schlauchquetschpumpe durchgespült werden kann.

Wenn die Einrichtung längere Zeit nicht gebraucht wird, ist es vorteilhaft, die Schlauchquetschpumpe 9 in den geöffneten Zustand zu bringen, der sich in der Schlauchquetschpumpe 9 befindende Bereich des flexiblen Schlauches 5 wird somit mechanisch entlastet, wodurch sich die Lebensdauer des Schlauches erhöht. Im geöffneten Zustand der Schlauchquetschpumpe 9 kann bei Bedarf der flexible Schlauch 5 in einfacher Weise herausgenommen und beispielsweise manuell gereinigt oder ersetzt werden.

Durch den Einsatz einer Schlauchquetschpumpe 9 wird neben den vielfältigen Möglichkeiten zum Bezug von verschiedenen Produkten insbesondere auch erreicht, dass das von der Milch durchflossene System weitestgehend glatt ist, und demzufolge keine abrupten Querschnittsänderungen oder Hinterstechungen aufweist, die tote Volumen bilden, in denen sich Rückstände ansammeln könnten, welche einen idealen Nährboden für Bakterienstämme bilden könnten. Vorzugsweise besteht das System, in welchem die Milch transportiert wird, aus einem einzigen Schlauch.

Es ist ohne weiteres denkbar, den einen Schlauch, durch welchen die Milch transportiert wird, durch zwei parallel geführte Schläuche zu ersetzen. Beide Schläuche werden durch die Schlauchquetschpumpe geführt und münden in die Emulgiervorrichtung. Der eine Schlauch ist ausgelegt für die Zuführung der Milch zur Schäumung in der Emulgiervorrichtung, während der andere Schlauch ausgelegt ist für Zuführung der Milch zur Ausgabe von warmer oder kalter Milch. Die beiden Schläuche sind mit einem Ventil versehen, welches wechselweise den einzusetzenden Schlauch öffnet und den anderen schliesst. Die Schliessung erfolgt hierbei durch Abklemmung des Schlauches durch das Ventil.

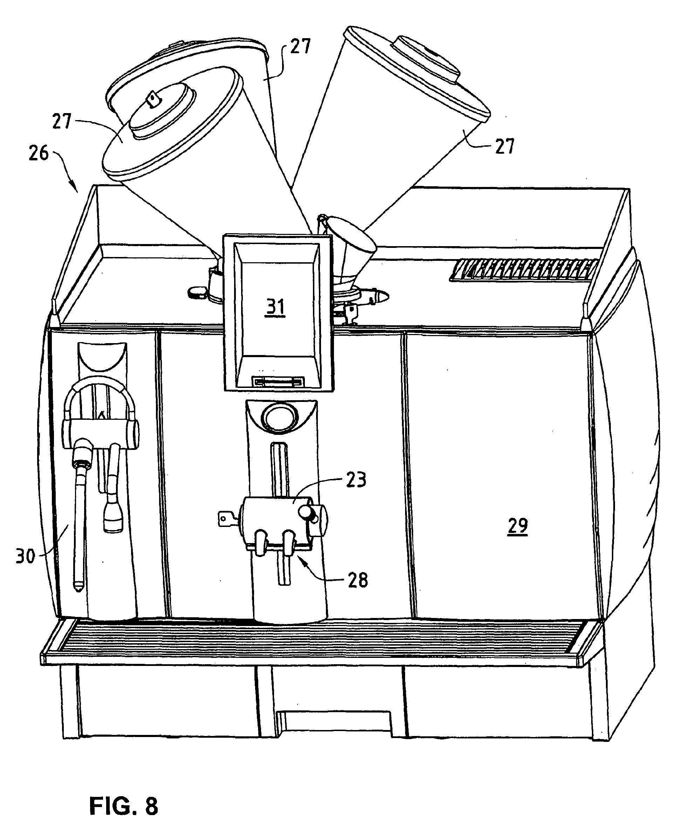

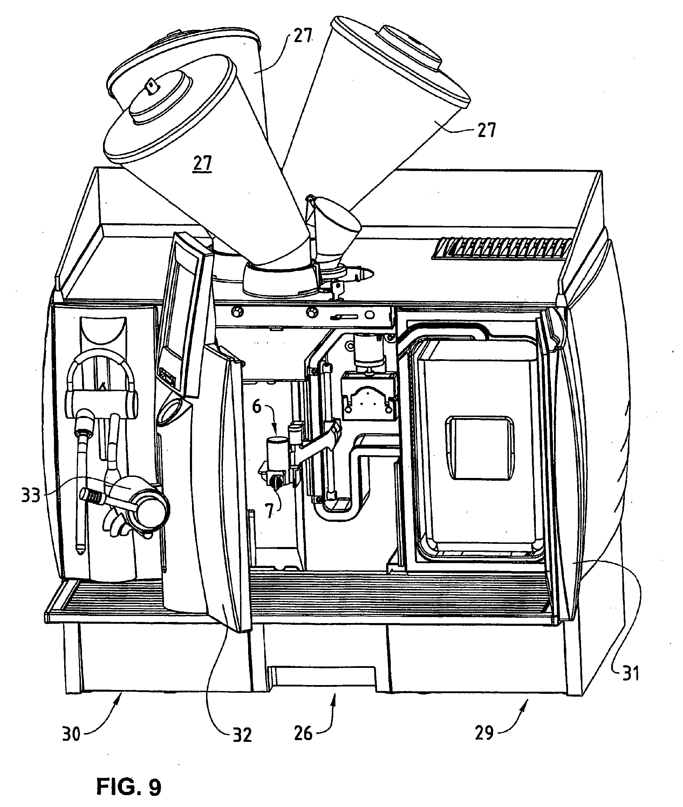

Die erfindungsgemässe Einrichtung zur Ausgabe von Milch und/oder Milchschaum kann so ausgebildet sein, dass sie beispielsweise in eine Kaffeemaschine, insbesondere Espresso-Maschine integriert werden kann, wie dies in den Fig. 8 und 9 dargestellt ist. In bekannter Weise weist diese Kaffeemaschine 26 Behälter 27 für die Aufnahme von Kaffeebohnen auf, sowie mindestens ein Mahlwerk, eine Brüheinrichtung und eine Kaffeeausgabedüse 28, in welche auch die Ausgabedüsen 7 der Einrichtung zur Ausgabe von Milch und/oder Milchschaum münden. Diese Einrichtung zur Ausgabe von Milch und/oder Milchschaum bildet somit ein Modul 29, mit welchem die Kaffeemaschine 26 ergänzbar und ausbaubar ist. Ein solches zusätzliches Modul bildet beispielsweise auch das Modul 30, welches zur Ausgabe von Wasserdampf und Heisswasser vorgesehen ist.

Vorteilhafterweise erfolgt die Steuerung der Kaffeemaschine 26 und der Module 29 und 30 über eine zentrale Steuereinheit, so dass beispielsweise automatisch ein optimaler Cappuccino, ein Macchiato, ein schwarzer Kaffee, ein Espresso oder ein Milchkaffee bezogen werden kann. Es kann aber auch kalte oder heisse Milch bezogen werden. Zusätzlich ist auch der Bezug von Heisswasser oder Wasserdampf möglich. Zur Bedienung und zur Auswahl der verschiedenen möglichen Produkte dient ein an der Kaffeemaschine angebrachter Touchscreen.

Wie aus der Fig. 9 ersichtlich ist, ist die Kaffeemaschine 26 und das Modul 29 mit jeweils einer die Frontabdeckung bildender zu öffnender und zu schliessender Türe 31, 32 versehen. Dadurch wird die Zugänglichkeit zu den einzelnen Modulen gewährleistet, beispielsweise zum Reinigen der Brüheinrichtung der Kaffeemaschine 26 oder zum Auffüllen von Milch des Milchbehälters im Modul 29. Beim Öffnen der Türe 32 wird die Ausgabedüse 7 von einem Ausgabebecher 33 getrennt, an welchem die Kaffeeausgabedüse 28 angebracht ist. Beim Schliessen der Türe 32 wird die Verbindung wieder hergestellt. Der Ausgabebecher 33 dient insbesondere dazu, einen optimalen Auslauf der bezogenen Produkte durch die Kaffeeausgabedüse 28 zu gewährleisten.

Wie bereits erwähnt worden ist, ist die Emulgiervorrichtung 6 mit der Ausgabedüse 7 in der Höhe verstellbar. Entsprechend ist auch die Kaffeeausgabedüse mit dem Ausgabebecher 33 auch im gekoppelten Zustand mit der Ausgabedüse 7 in der Höhe verstellbar und an die Gefässe anpassbar, in welche die Produkte ausgegeben werden sollen.

Wie ebenfalls bereits erwähnt worden ist, kann die Umstellung der Schlauchquetschpumpe 9 direkt mit unter Druck stehendem Leitungswasser vorgenommen werden, es könnte aber auch vorgesehen sein, das durch die Pumpe der Kaffeemaschine 26 gelieferte und unter Druck stehende Wasser zu verwenden.

Mit der erfindungsgemässen Einrichtung zur Ausgabe von Milch und/oder Milchschaum, insbesondere wenn diese in einer Kaffeemaschine integriert ist, wird ein Gerät erhalten, welches optimal bedienbar ist und mit welchem Produkte von hoher Qualität ausgegeben werden können.

## Patentansprüche

1. Einrichtung zur Ausgabe von Milch und/oder Milchschaum, umfassend einen Rahmen (20), einen im Rahmen (20) angeordneten kühlbaren Schrank (3) für die Aufnahme eines Milch enthaltenden Behälters (1), eine Entnahmeleitung (4), die in den Behälter (1) einsetzbar ist, und eine ausserhalb des kühlbaren Schrankes (3) angeordneten Emulgiervorrichtung (6), die über eine weitere Leitung (5) zur Zuführung der Milch mit der Entnahmeleitung (4) verbunden ist, welche weitere Leitung (5) aus einem flexiblen Schlauch besteht, der in eine Schlauchquetschpumpe (9) eingelegt ist, und welche Emulgiervorrichtung (6) zur Erwärmung oder Aufschäumung der durchgeleiteten Milch, die dann zur Ausgabedüse (7) gelangt, mit einer Wasserdampfzuführung versehen ist, **dadurch gekennzeichnet, dass** die Schlauchquetschpumpe (9) innerhalb des kühlbaren Schrankes (3) angeordnet ist und über einen ausserhalb des kühlbaren Schrankes (3) angeordneten Antriebsmotor, insbesondere Elektromotor antreibbar ist und dass die Schlauchquetschpumpe (9) mit Umstellmitteln (10) ausgestattet ist, mit welchen die Schlauchquetschpumpe (9) von einem geschlossenen Pumpzustand in einen offenen, den Durchgang des flexiblen Schlauches (5) freigebenden Zustand umstellbar ist.

2. Einrichtung nach Anspruch 1, **dadurch gekennzeichnet, dass** die Umstellmittel (10) aus einer Kolben-Zylindereinheit (11) gebildet sind, deren Kolbenstange (24) mit dem den Quetschraum begrenzenden Bogenteil (12) verbunden ist.

3. Einrichtung nach Anspruch 2, **dadurch gekennzeichnet, dass** der Kolben (15) der Kolben-Zylindereinheit (10) mit unter Druck stehendem Wasser beaufschlagbar ist, dass die Beaufschlagung über ein Ventil (13) steuerbar ist und dass das Rücklaufwasser als Abwasser abführbar ist.

4. Einrichtung nach einem der Ansprüche 1 bis 3, **dadurch gekennzeichnet, dass** durch Umkehrung der Drehrichtung der Schlauchquetschpumpe (9) nach dem Milchbezugsprozess die in der weiteren Leitung (5) sich befindende Milch in den Behälter (1) zurückpumpbar ist.

5. Einrichtung nach einem der Ansprüche 1 bis 4, **dadurch gekennzeichnet, dass** im Bereich des Bodens (19) des kühlbaren Schrankes (3), auf welchen der Behälter (1) aufsetzbar ist, Mittel (18) zum Feststellen des Gewichts des Behälters (1) angeordnet sind.

6. Einrichtung nach einem der Ansprüche 1 bis 5, **dadurch gekennzeichnet, dass** der Behälter (1) für die Milch aus dem kühlbaren Schrank (3) herausnehmbar ist, dass an dessen Stelle ein anderer Behälter mit Reinigungsmittel einsetzbar ist, dass das Reinigungsmittel mit der Schlauchquetschpumpe (9) durch die Entnahmeleitung (4), die weitere Leitung (5) und die Emulgiervorrichtung (6) förderbar ist und dass zum Spülen nach dem Reinigungsvorgang der Behälter mit Spülwasser füllbar ist, welches ebenfalls durch die Entnahmeleitung (4), die weitere Leitung (5) und die Emulgiervorrichtung (6) förderbar ist.

7. Einrichtung nach einem der Ansprüche 1 bis 6, **dadurch gekennzeichnet, dass** der flexible Schlauch (5) aus Silikon oder dergleichen besteht.

8. Kaffeemaschine, insbesondere Espressomaschine, mit mindestens einem Behälter (27) für Kaffeebohnen, einem Mahlwerk, einer Brüheinrichtung und einer Kaffeeausgabedüse (28) und mit einer Einrichtung zur Ausgabe von Milch und/oder Milchschaum nach einem der Ansprüche 1 bis 7, **dadurch gekennzeichnet, dass** die Einrichtung zur Ausgabe von Milch und/oder Milchschaum als Modul (29) an die Kaffeemaschine (26) angebaut ist, und dass die Kaffeemaschine (26) durch weitere Module (30) ausbaubar ist.

9. Kaffeemaschine nach Anspruch 8, **dadurch gekennzeichnet, dass** zwischen Brüheinrichtung und Kaffeeausgabedüse (28) ein Ausgabebecher (33) eingesetzt ist, in welchen auch die Ausgabedüse (7) der Emulgiervorrichtung (6) mündet und die Ausgabe von Kaffee, Milch und/oder Milchschaum durch die Kaffeeausgabedüse (28) erfolgt.

10. Kaffeemaschine nach Anspruch 8 oder 9, **dadurch gekennzeichnet, dass** die Kolben-Zylindereinheit (11) über das unter Druck stehende Wasser der Kaffeemaschine (26) steuerbar ist.

## Claims

1. Device for dispensing milk and/or milk froth, comprising a frame (20), a coolable cabinet (3), disposed in the frame (20), for receiving a container (1) containing milk, an extraction line (4) which is insertable in the container (1), and an emulsifying device (6) disposed outside the coolable cabinet (3), which emulsifying device is connected to the extraction line (4) via a further line (5) for supply of the milk, which further line (5) consists of a flexible tube, which is inserted in a peristaltic pump (9), and which emulsifying device (6) is provided with a steam supply for heating or frothing the conveyed milk which then reaches the discharge nozzle (7), **characterised in that** the peristaltic pump (9) is disposed inside the coolable cabinet (3) and is drivable via a drive motor, in particular an electromotor, disposed outside the coolable cabinet (3), and **in that** the peristaltic pump (9) is provided with switching means (10), with which the peristaltic pump is switchable from a closed pump state into an open pump state releasing the passage of the flexible tube (5).

2. Device according to claim 1, **characterised in that** the switching means (10) is made up of a piston cylinder unit (11), the piston rod of which is connected to the curved part (12) bordering the squeeze space.

3. Device according to claim 2, **characterised in that** the piston (15) of the piston cylinder unit (10) is impinged by pressurized water, the pressurization is controllable via a valve (13), and the return water is dischargeable as waste water.

4. Device according to one of the claims 1 to 3, **characterised in that** by reversing the direction of rotation of the peristaltic pump (9) after the milk dispensing process, the milk located in the further line (5) is pumpable back into the container (1).

5. Device according to one of the claims 1 to 4, **characterised in that** means of determining the weight of the container (1) are disposed in the region of the floor (19) of the coolable cabinet (3) on which the container (1) is placeable.

6. Device according to one of the claims 1 to 5, **characterised in that** the container (1) for the milk is removable from the coolable cabinet (3), another container with cleaning agents is able to be put in its place, the cleaning agents are conveyable by means of the peristaltic pump (9) through the extraction line (4), the further line (5) and the emulsifying device (6), and the container is fillable with rinse water for rinsing after the cleaning procedure, which rinse water is also conveyable through the extraction line (4), the further line (5) and the emulsifying device (6).

7. Device according to one of the claims 1 to 6, **characterised in that** the flexible tube (5) is made of silicon or the like.

8. Coffee machine, in particular espresso machine, with at least one container (27) for coffee beans, a grinding device, a brewing device and a coffee discharge nozzle (28) and with a device for dispensing milk and/or milk froth according to one of the claims 1 to 8, **characterised in that** the device for dispensing milk and/or milk froth is attached to the coffee machine (26) as a module (29), and the coffee machine (26) is able to be extended or upgraded through further modules (30).

9. Coffee machine according to claim 8, **characterised in that** placed between brewing device and coffee discharge nozzle (28) is a dispensing cup (33), into which the discharge nozzle (7) of the emulsifying device (6) also empties, and the dispensing of coffee, milk and/or milk froth takes place through the coffee discharge nozzle (28).

10. Coffee machine according to claim 8 or 9, **characterised in that** the piston cylinder unit (11) is controllable by means of the coffee machine (26) water which is under pressure.

## Revendications

1. Dispositif pour la distribution de lait et/ou de mousse de lait, comprenant un cadre (20), une armoire réfrigérante (3) disposée dans le cadre (20) pour recevoir un récipient (1) contenant du lait, une conduite de prélèvement (4) qui peut être introduite dans le récipient (1) et un dispositif d'émulsion (6) qui est disposé à l'extérieur de l'armoire réfrigérante (3), et qui est relié avec la conduite de prélèvement (4) à une autre conduite (5) pour l'amenée du lait, autre conduite (5) qui se compose d'un tuyau flexible qui est introduit dans une pompe péristaltique (9) et dispositif d'émulsion (6) qui est muni d'une conduite d'amenée de vapeur d'eau pour le chauffage ou le moussage du lait amené qui parvient alors à la buse de distribution (7), **caractérisé en ce que** la pompe péristaltique (9) est disposée à l'intérieur de l'armoire réfrigérante (3) et peut être entraînée par un moteur d'entraînement disposé à l'extérieur de l'armoire réfrigérante (3), en particulier un moteur électrique et **en ce que** la pompe péristaltique (9) est munie de moyens de réglage (10) qui permettent de modifier la pompe péristaltique électrique (9) d'un état de pompe fermé à un état ouvert libérant le passage du tuyau flexible (5).

2. Dispositif selon la revendication 1, **caractérisé en ce que** les moyens de commutation (10) se composent d'une unité à cylindre et piston (11) dont la tige de piston (24) est reliée à la partie d'arc limitant l'enceinte de compression (12).

3. Dispositif selon la revendication 2, **caractérisé en ce que** le piston (15) de l'unité à cylindre et piston (10) peut subir l'impact d'eau sous pression, **en ce que** l'impact est commandable par une soupape et **en ce que** l'eau de recirculation peut être éliminée en tant qu'eau usagée.

4. Dispositif selon l'une des revendications 1 à 3, **caractérisé en ce que** par inversion du sens de rotation de la pompe péristaltique (9) après le processus de prélèvement de lait, le lait se trouvant dans l'autre conduite (5) peut être renvoyé au récipient (1).

5. Dispositif selon l'une des revendications 1 à 4, **caractérisé en ce que** dans la zone du fond (19) de l'armoire réfrigérante (3), sur laquelle peut être placé le récipient (1), des moyens (18) pour déterminer le poids du récipient (1) sont disposés.

6. Dispositif selon l'une des revendications 1 à 5, **caractérisé en ce que** le récipient (1) pour le lait peut être retiré hors de l'armoire réfrigérante (3), **en ce qu'**à la place un autre réservoir contenant des détergents peut être utilisé, **en ce que** le détergeant avec la pompe péristaltique (9) peut être acheminé par la conduite de prélèvement (4), l'autre conduite (5) et le dispositif d'émulsion (6) et **en ce que** pour le rinçage après l'opérations de nettoyage, le récipient peut être rempli d'eau de rinçage qui peut être amenée par la conduite de prélèvement (4), l'autre conduite (5) et le dispositif d'émulsion (6).

7. Dispositif selon l'une des revendications 1 à 6, **caractérisé en ce que** le tuyau flexible (5) se compose de silicone ou similaire.

8. Machine à café en particulier une machine à café expresso avec au moins un récipient (27) pour les grains de café, un appareil à moudre, un dispositif d'infusion et une buse de distribution de café (28) et avec un dispositif pour la distribution de lait ou de mousse de lait selon l'une des revendications 1 à 7, **caractérisée en ce que** le dispositif pour la distribution de lait ou de mousse de lait est monté comme module (29) sur la machine à café (26) et **en ce que** la machine à café (26) peut être complétée par d'autres modules (30).

9. Machine à café selon la revendication 8, **caractérisée en ce qu'**entre le dispositif d'infusion et la buse de distribution de café (9), il est placé un godet (33) dans lequel débouche également la buse de distribution (7) du dispositif d'émulsion (6) et **en ce que** la distribution de café, de lait et/ou de mousse de lait s'effectue par la buse de distribution de café (28)

10. Machine à café selon la revendication 8 ou 9, **caractérisée en ce que** l'unité à cylindre et à piston (11) peut être commandée par l'eau sous pression de la machine à café (26).
